# EUROPÄISCHE PATENTSCHRIFT

(11) **EP 2 327 583 B1**
(45) Veröffentlichungstag und Bekanntmachung des Hinweises auf die Patenterteilung: **25.01.2012**
(21) Anmeldenummer: 09177015.6
(22) Anmeldetag: 25.11.2009
(51) Int. Cl.: B60Q 1/068

(54) **Scheinwerfer mit einem in einer ersten Richtung schwenkbaren Tragmittel und einer dazu in einer zweiten Richtung schwenkbaren Lichteinheit**
Headlamp with a support element which can be pivoted in a first direction and a light unit which can be pivoted in a second direction
Phare doté d'un support pivotant dans une première direction et d'une unité d'éclairage pivotant dans une deuxième direction par rapport à celui-ci

(43) Veröffentlichungstag der Anmeldung: 01.06.2011
(73) Patentinhaber: Hella KGaA Hueck & Co., 59552 Lippstadt (DE)
(72) Erfinder: Herbers, Thomas, 59555 Lippstadt (DE)

(56) Entgegenhaltungen:
- DE-A1- 10 325 331
- DE-A1-102005 038 829
- GB-A- 2 109 082
- US-A- 5 214 971

## Beschreibung

Die Erfindung betrifft einen Scheinwerfer mit einem Gehäuse, einem um die erste Achse gegenüber dem Gehäuse schwenkbaren Tragmittel, an der eine erste Lichteinheit angebracht sein kann, und einer zum Tragmittel um eine zweite Achse schwenkbaren zweiten Lichteinheit, wobei der Scheinwerfer eine Antriebswelle zum Schwenken der Lichteinheit um die zweite Achse aufweist, die über ein Getriebe mit der Lichteinheit gekoppelt ist, wobei die Antriebswelle zur Übertragung einer Drehbewegung von einem Antriebskopf der Antriebswelle zu einem Abtriebskopf der Antriebswelle geeignet und eingerichtet ist und wobei der Antriebskopf an dem Gehäuse gelagert ist.

Ein derartiger Scheinwerfer ist aus DE 103 25 331 A1 bekannt und kann als Hauptscheinwerfer in einem Kraftfahrzeug verwendet werden. Mit einem Hauptscheinwerfer eines Kraftfahrzeugs können verschiedene Lichtverteilungen erzeugt werden, um den Straßenraum vor dem Kraftfahrzeug zu beleuchten. Die bekanntesten Lichtverteilungen sind das Fernlicht und das Abblendlicht. Das Abblendlicht bei einem Kraftfahrzeughauptscheinwerfer ist so eingestellt, dass unterhalb einer Horizontlinie ein sich lang erstreckendes Band beleuchtet ist. Dieses Band wird von einer ersten Lichteinheit erzeugt. Außerdem wird ein kreissektorförmiger Bereich beleuchtet, der - bei Fahrzeugen für den Rechtsverkehr - rechts von der Mitte oberhalb der Horizontlinie zu finden ist. Dieser kreissektorförmige Bereich wird von einer zweiten Lichteinheit des Scheinwerfers erzeugt.

Bei einem Scheinwerfer der eingangs genannten Art ist die erste Lichteinheit an dem in dem Gehäuse schwenkbaren Tragmittel angebracht. Diese erste Lichteinheit ist zusammen mit dem Tragmittel um die erste Achse schwenkbar. Ein Scheinwerfer mit einem Tragmittel und einer daran angebrachten ersten Lichteinheit ist aus der deutschen Offenlegungsschrift DE 10 2007 040 728 A1 bekannt. Der dort offenbarte Scheinwerfer weist jedoch keine zweite Lichteinheit auf.

Die zweite Lichteinheit ist ebenfalls zusammen mit dem Tragmittel gegenüber dem Gehäuse um die erste Achse schwenkbar. Sie ist allerdings auch um eine zweite Achse gegenüber dem Treibmittel schwenkbar. Zum Einstellen des Abblendlichts werden die erste Lichteinheit und die zweite Lichteinheit geschwenkt, so dass die gewünschte Abblendlichtverteilung erreicht wird.

Die Einstellung des Abblendlichts erfolgt nach der Montage des Scheinwerfers im Kraftfahrzeug. Bei der Einstellung wird zunächst der Scheinwerfer durch Schwenken des Tragmittels um die erste Achse, die horizontal verläuft, so eingestellt, dass das von der ersten Lichteinheit beleuchtete Band unterhalb der Horizontlinie zu finden ist. Gleichzeitig damit wird auch die zweite Lichteinheit so eingestellt, dass der kreissektorförmige Bereich unmittelbar oberhalb der Horizontlinie zu finden ist. Allerdings könnte der kreissektorförmige Bereich dann noch zu weit nach rechts oder zu weit nach links leuchten. Um dieses einzustellen wird dann die zweite Lichteinheit um die zweite Achse, die vertikal verläuft, gegenüber dem Tragmittel geschwenkt.

Damit die zweite Lichteinheit um die zweite, horizontal verlaufende Achse geschwenkt werden kann, ist die Antriebswelle vorgesehen, in welche an dem Antriebskopf der Antriebswelle ein Drehmoment eingeleitet werden kann und die an dem Abtriebskopf das Drehmoment in das Getriebe überträgt, welches die Einstellung der zweiten Lichteinheit bewirkt. Der Antriebskopf der Antriebswelle ist dabei an dem Gehäuse des Scheinwerfers gelagert. Eine Schlüsselfläche an dem Antriebskopf ist von außerhalb des Gehäuses zugänglich. An der Schlüsselfläche kann ein Werkzeug angesetzt werden, um das Drehmoment in die Antriebswelle einzuleiten. Durch das Schwenken des Tragmittels um die erste Achse wird der Abtriebskopf der Antriebswelle allerdings gegenüber dem Antriebskopf verschoben. Diese Verschiebung wird bei bekannten Scheinwerfern durch flexible Wellen oder Kardangelenke ausgeglichen. Diese Lösungen sind allerdings kostenintensiv und aufwändig.

Hier setzt die vorliegende Erfindung an.

Der vorliegenden Erfindung liegt die Aufgabe zu Grunde einen Scheinwerfer der eingangs genannten Art so zu verbessern, dass die Verschiebung des Abtriebskopfes gegenüber dem Antriebskopf der Antriebswelle mit einfachen technischen Mitteln ausgeglichen werden kann.

Diese Aufgabe wird erfindungsgemäß dadurch gelöst, dass die Antriebswelle einen ersten Wellenteil und einen zweiten Wellenteil aufweist, wobei die Wellenteile an ersten Enden zur Übertragung der Drehbewegung nach Art einer Vielkeilverbindung zueinander axial verschiebbar und drehfest mit einander verbunden sind und wobei sich eine zu übertragende Drehbewegung im ersten Wellenteil um eine erste Drehachse und im zweiten Wellenteil um eine zweite Drehachse vollzieht, und dass die Wellenteile um vorzugsweise mehrere Achsen senkrecht zur ersten Drehachse und zur zweiten Drehachse zueinander schwenkbar sind.

Vielkeilverbindungen werden in Vielkeilwellen dazu benutzt, um Drehmomente zu übertragen aber gleichzeitig eine axiale Verschiebung des Antriebskopfes zum Abtriebskopf der Antriebswelle zu ermöglichen. Eine solche Vielkeilwelle ist beispielsweise aus der Druckschrift mit der Veröffentlichungsnummer DE 30 02 143 C2 bekannt. Bei bekannten Vielkeilwellen ist jedoch ein Schwenken der die Vielkeilwellen bildenden Wellenteile um eine oder mehrere Achsen senkrecht zu den Drehachsen an Wellenteilen nicht möglich. Hierin unterscheidet sich die Antriebswelle einer erfindungsgemäßen Vorrichtung von einer bekannten Vielkeilwelle. Die Antriebsachse eines erfindungsgemäßen Scheinwerfers ist so eingerichtet, dass die Wellenteile zueinander geneigt werden können. Die Antriebswelle weist somit wenigstens einen Freiheitsgrad mehr auf als eine übliche Vielkeilwelle. Die Antriebswelle einer erfindungsgemäßen Vorrichtung kann also Einknicken. Dieses Einknicken ermöglicht das vertikale Schwenken des Abtriebskopfes der Antriebswelle gegenüber dem Antriebskopf durch das Schwenken des Tragmittels um die erste Achse.

Da ein erfindungsgemäßer Scheinwerfer nicht notwendigerweise eine erste Lichteinheit aufweisen muss, ist in den Ansprüchen die vorstehend als zweite Lichteinheit bezeichnete Einheit als Lichteinheit bezeichnet.

Bei einem erfindungsgemäßen Scheinwerfer kann der erste Wellenteil für die Verbindung mit dem zweiten Wellenteil am ersten Ende eine Außenzahnung, einen Außensechskant oder dergleichen aufweisen. Der zweite Wellenteil ist für die Verbindung mit dem ersten Wellenteil dann dazu komplementär am ersten Ende mit einer Innenzahnung, einem Innensechskant oder dergleichen ausgestattet. Die zueinander komplementären Teile greifen in einander und können so Drehmomente von einem Wellenteil zum anderen Wellenteil übertragen, wobei die Wellenteile zueinander axial verschiebbar sind. Selbstverständlich ist es dabei auch denkbar, dass das zweite Wellenteil am ersten Ende eine Außenzahnung, einen Außensechskant oder dergleichen aufweist und der erste Wellenteil komplementär dazu mit Innenzahnung, einem Innensechskant oder dergleichen ausgestattet ist.

Der erste Wellenteil kann am dem ersten Ende gegenüberliegenden Ende den Antriebskopf der Antriebswelle und der zweite Wellenteil am dem ersten Enden gegenüberliegenden Ende den Abtriebskopf aufweisen. Ebenso ist es möglich, dass der erste Wellenteil an dem dem ersten Ende gegenüberliegenden Ende den Abtriebskopf der Antriebswelle und der zweite Wellenteil an dem dem ersten Ende gegenüberliegenden Ende den Antriebskopf aufweist.

Zum Erleichtern der Schwenkbewegung zwischen den Wellenteilen um eine der Achsen senkrecht zu der ersten Drehachse und der zweiten Drehachse kann die Außenzahnung, der Außensechskant oder dergleichen abgerundet sein. Dadurch kann die Innenzahnung, der Innensechskant oder dergleichen in verschiedenen Stellungen der Wellenteile zueinander tagential an der Außenzahnung, dem Außensechskant oder dergleichen anliegen.

Der Antriebskopf eines erfindungsgemäßen Scheinwerfers kann einen Innensechskant als Schlüsselfläche aufweisen.

Bei einem erfindungsgemäßen Scheinwerfer kann das zweite Wellenteil drehbar um die zweite Drehachse an der Lichteinheit gelagert sein.

Der Abtriebskopf kann ein Kegelrad umfassen. Das Kegelrad des Abtriebkopfes kann ein Kegelrad des Getriebes kämmen.

Anhand der beigefügten Zeichnungen wird die Erfindung nachfolgend näher erläutert. Dabei zeigt:
- Fig. 1: in einer ersten perspektivischen Ansicht einen Teil eines erfindungsgemä- ßen Scheinwerfers umfassend eine Antriebswelle und eine Getriebeein- heit,
- Fig. 2: in einer zweiten perspektivischen Ansicht den in Figur 1 dargestellten Teil des Scheinwerfers,
- Fig. 3: einen Schnitt durch den erfindungsgemäßen Scheinwerfer einschließlich eines Schnittes durch die Antriebsachse und die Getriebeeinheit,
- Fig. 4: ein Detail aus Fig. 3, nämlich eine Schnittansicht eines Antriebskopfes,
- Fig. 5: eine Schnittansicht einer Verbindung von einem ersten Wellenteil und ei- nem zweiten Wellenteil der Antriebsachse,
- Fig. 6: einen Schnitt durch den erfindungsgemäßen Scheinwerfer einschließlich eines Schnittes durch die Antriebsachse und die Getriebeeinheit mit einer ersten Winkelstellung der Wellenteile der Antriebswelle zueinander,
- Fig. 7: einen Schnitt durch den erfindungsgemäßen Scheinwerfer einschließlich eines Schnittes durch die Antriebsachse und die Getriebeeinheit mit einer zweiten Winkelstellung der Wellenteile der Antriebswelle zueinander und
- Fig. 8: einen Schnitt durch den erfindungsgemäßen Scheinwerfer einschließlich eines Schnittes durch die Antriebsachse und die Getriebeeinheit mit einer dritten Winkelstellung der Wellenteile der Antriebswelle zueinander,

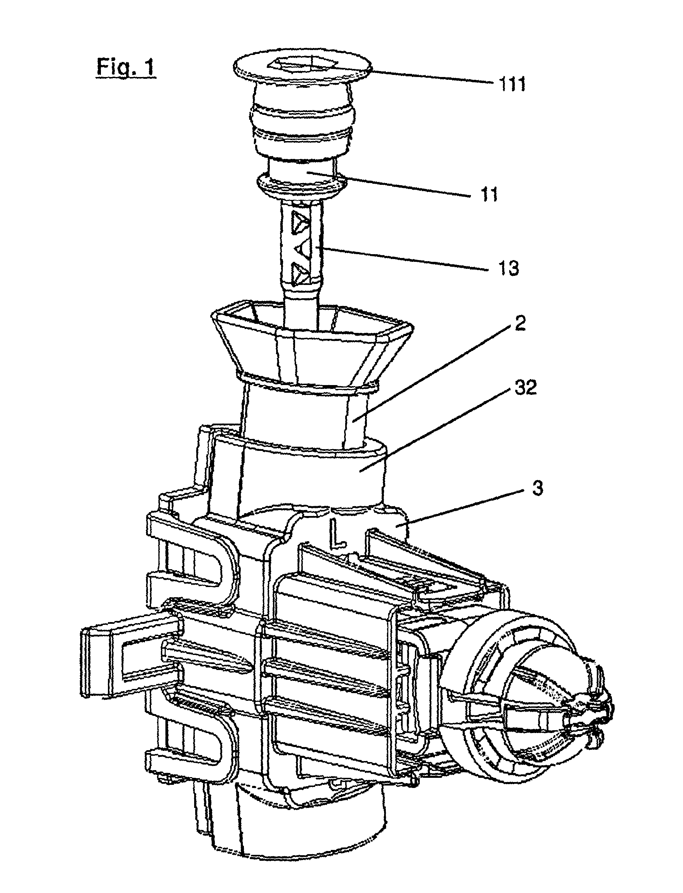

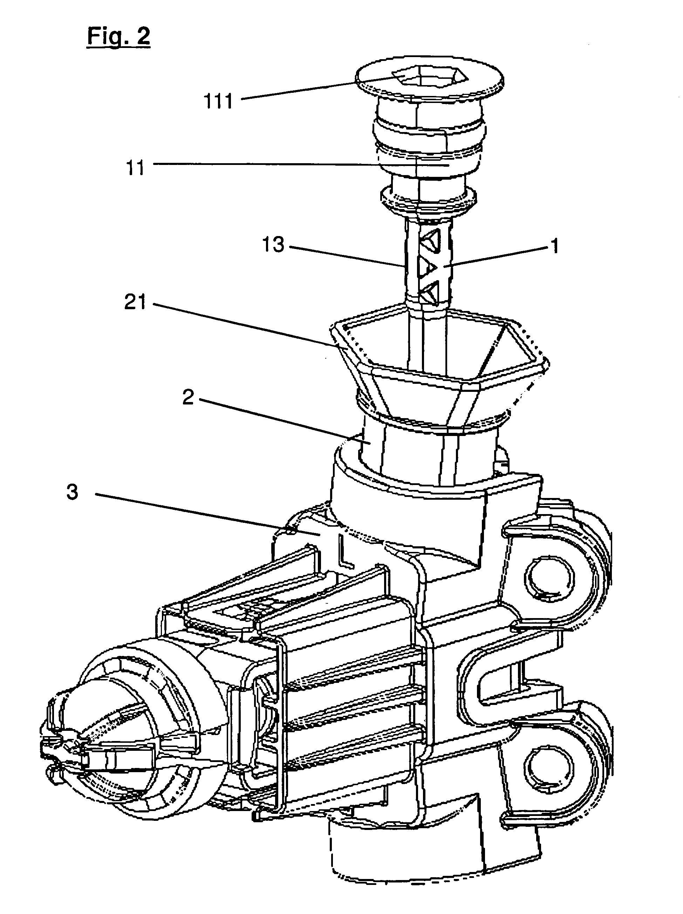

Der in den Figuren 1 und 2 von verschiedenen Seiten dargestellte Teil eines erfindungsgemäßen Scheinwerfers umfasst die Antriebswelle 1, 2 und eine Getriebeeinheit 3, die über die Antriebswelle angetrieben werden kann.

Die Antriebswelle 1, 2 hat zwei Wellenteile, nämlich den ersten Wellenteil 1 und den zweiten Wellenteil 2. Die beiden Wellenteile 1, 2 sind nach Art einer Vielkeilverbindung miteinander verbunden, bilden jedoch zusammen keine Vielkeilwelle im engeren Sinne. Im Unterschied zu einer Vielkeilwelle im engeren Sinne sind die Wellenteile nicht nur axial gegeneinander verschiebbar und zur Übertragung von Drehmomenten ausgelegt. Vielmehr sind die Wellenteile 1, 2 gegeneinander schwenkbar. Dieses ist bei einer Vielkeilwelle im engeren Sinne nicht der Fall.

Der erste Wellenteil weist einen Antriebskopf 11 auf, über den ein Drehmoment in die Antriebswelle 1, 2 eingeleitet werden kann. An dem Antriebskopf 11 ist dazu eine Schlüsselfläche in Form eines Innensechskants 111 vorgesehen. Der Antriebskopf 11 ist in einem Teil 41 eines Gehäuses 4 so gelagert, dass der erste Wellenteil 1 eine Taumelbewegung ausführen kann. Das Teil 41, an dem der Antriebskopf 11 in dem Gehäuse 4 gelagert ist, wird durch eine Gabel 41 gebildet, die in einer Nut 113 im Antriebskopf 11 eingreift. Die Gabel 41 hatte dabei gegenüber der Nut 113 so viel Spiel, dass die Taumelbewegung des ersten Wellenteils 1 gegenüber dem Gehäuse 4 möglich ist. An dem Antriebskopf 11 sind konische Abschnitte 114, 115 vorgesehen, die ebenfalls eine Taumelbewegung des Antriebskopfes 11 gegenüber einem hohlzylindrischen Abschnitt 42 des Gehäuses 4 ermöglichen. Zwischen diesen konischen Abschnitten 114, 115 ist eine Nut vorgesehen, in welche ein O-Ring 112 eingesetzt ist. Der O-Ring 112 ermöglicht eine Abdichtung des Inneren des Gehäuses 4 gegenüber der Umgebung des Gehäuses. Dieses ist wichtig, damit keine Feuchtigkeit z.B. aus einem Motorraum in den Scheinwerfer eindringen kann. Die möglichen Schwenkachsen, um die der Antriebskopf 11 gegenüber dem Gehäuse 4 schwenken kann, liegen in der Ebene des O-Ringes 112.

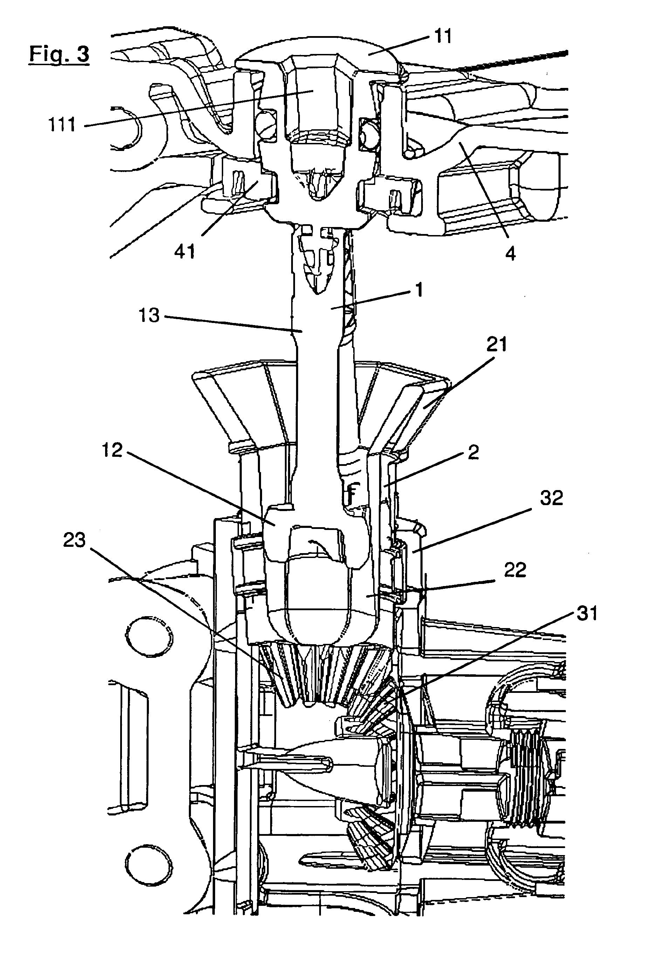

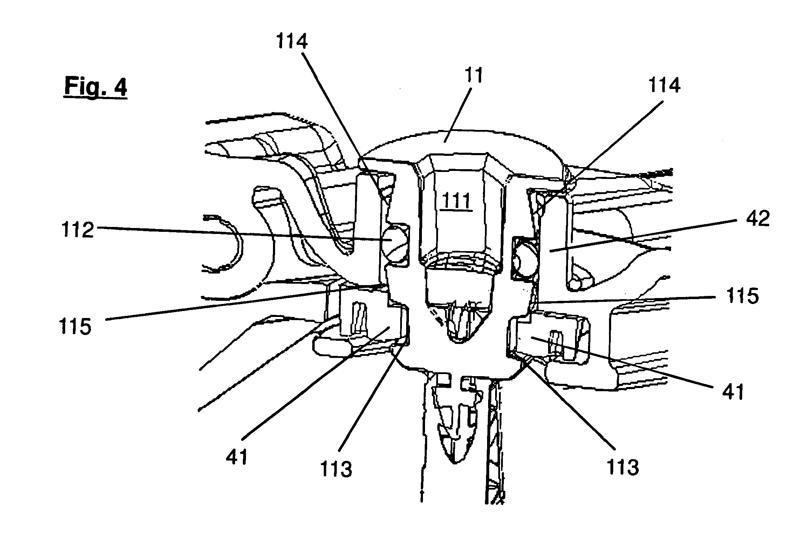

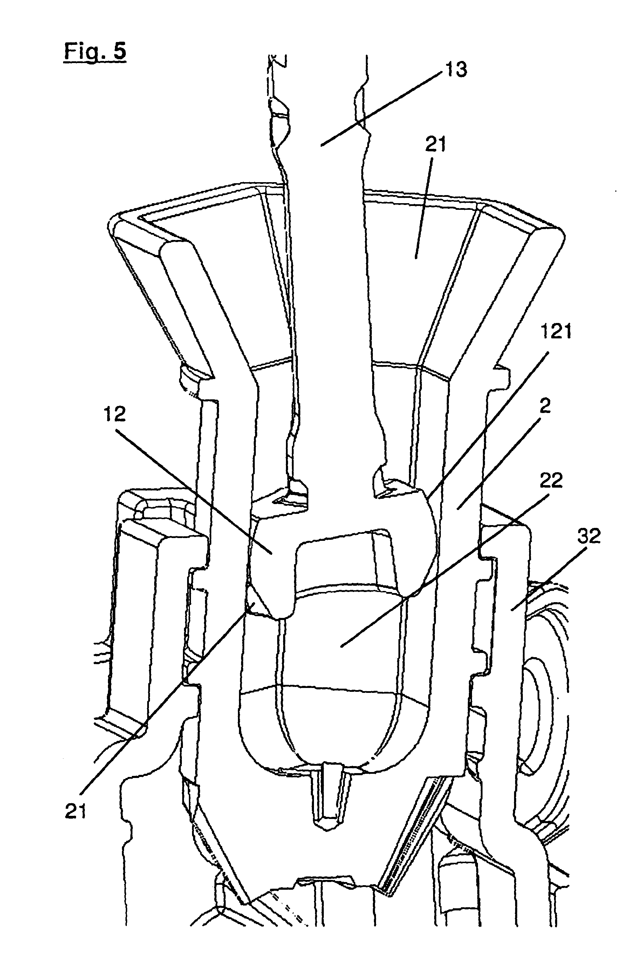

An den Antriebskopf 11 schließt sich ein Wellenschaft an der an einem ersten Ende der Welle endet. An dem ersten Ende der Welle ist ein Außensechskant 12 vorgesehen (siehe Figur 3 bis 6). Der Außensechskant 12 ist gewölbt oder ballig ausgebildet und taucht in einen langgestreckten Innensechskant 22 des zweiten Wellenteils 2 ein. Der zweite Wellenteil ist in einem Lagerabschnitt 31 der Getriebeeinheit um seine Längsachse drehbar gelagert. Im Vergleich zu dem ersten Wellenteil 1 ist der zweite Wellenteil 2 sehr kurz ausgebildet. Er weist einen Abtriebskopf 23 mit einem Kegelrad auf, der mit einem Kegelrad 32 der Getriebeeinheit 3 zusammenwirkt und eine Drehbewegung der Antriebswelle 1, 2 auf das Kegelrad 32 der Getriebeeinheit 3 überträgt. An den Abtriebskopf 23 des zweiten Wellenteils schließt sich ohne weiteren Übergang das erste Ende des zweiten Wellenteils 2 an. In diesem zweiten Ende der Welle ist der lang gestreckte Innensechskant 22 vorgesehen. Das ballig ausgebildete Außensechskant 12 am ersten Ende des ersten Wellenteils 1 taucht in den Innensechskant 22 ein. Der Außensechskant 12 ist axial in dem Innensechskant 22 bewegbar. Außerdem kann der Außensechskant 12 und der mit diesem verbundene Wellenschaft 13, d.h. das gesamte erste Wellenteil 1 gegenüber dem Innensechskant 22 beziehungsweise dem gesamten zweiten Wellenteil 2 geschwenkt werden, so dass die Längsachse des ersten Wellenteils 1 und des zweiten Wellenteils 2, die den Drehachsen der Wellenteile 1, 2 entsprechen, zueinander geneigt sind. Ein Trichter 21 an der Öffnung des Innensechskants 22 erleichtert dass Einführen des ersten Wellenteils 1 bei der Montage der Antriebswelle 1, 2 in dem Scheinwerfer.

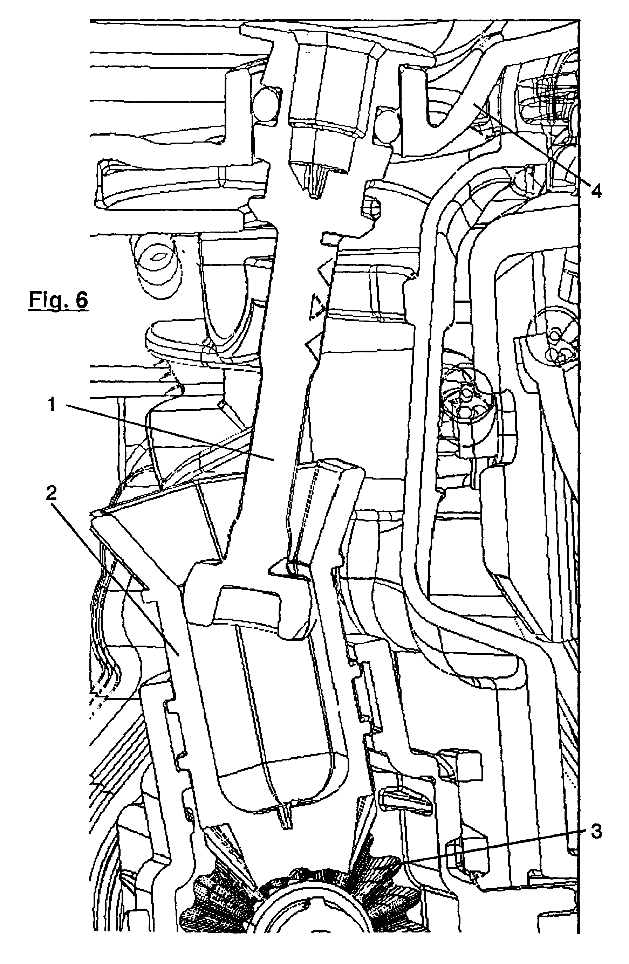

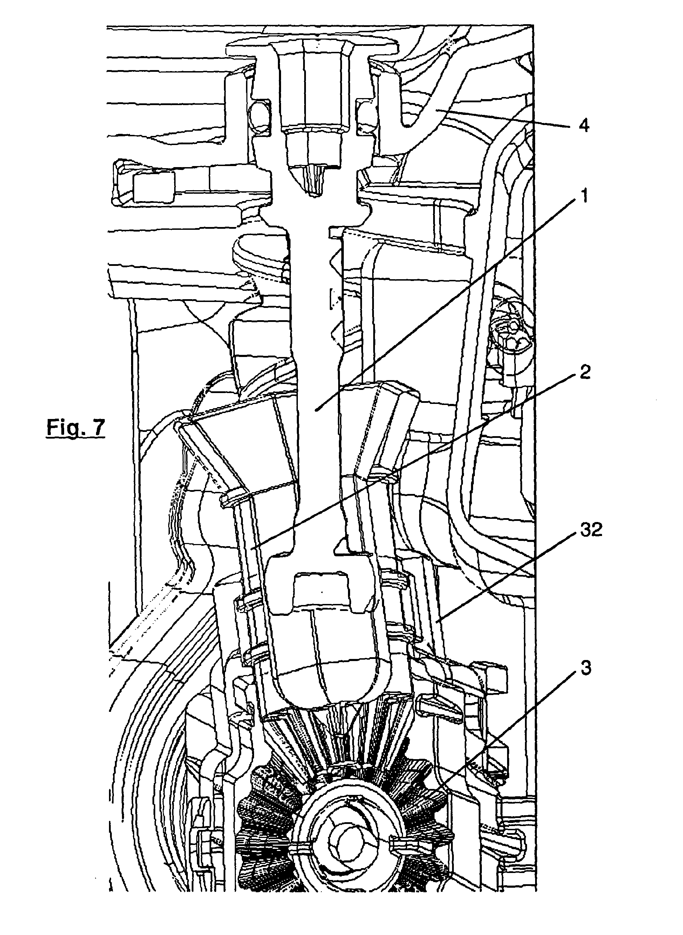

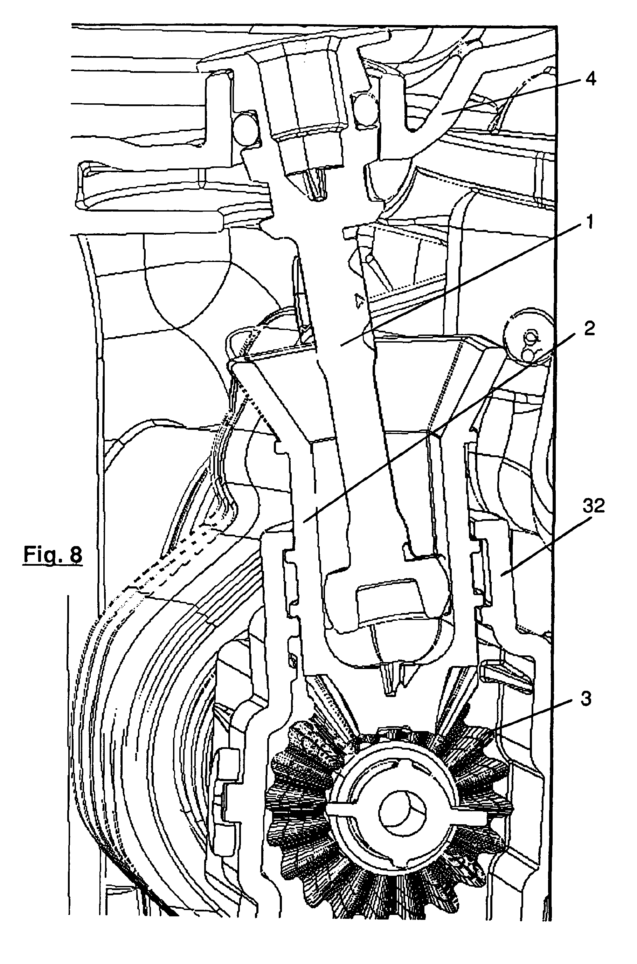

Die Figuren 6 bis 8 zeigen verschiedene Winkelstellungen oder Neigungen des ersten Wellenteils 1 zum zweiten Wellenteil 2. Die unterschiedlichen Neigungen werden durch das Schwenken des Tragmittels des Scheinwerfers hervorgerufen. Die unterschiedlichen Stellungen der Lichteinheit sind an den unterschiedlichen Stellungen des zweiten Wellenteils 2 bzw. der Getriebeeinheit 3 erkennbar. Die Getriebeeinheit 3 ist fest an der zu verstellenden (zweiten) Lichteinheit angebracht.

### Bezugszeichenliste

- 1: erster Wellenteil
- 11: Antriebskopf
- 111: Innensechskant
- 112: O-Ring
- 113: Nut
- 114: Konus
- 115: Konus
- 12: Außensechskant, erstes Ende
- 13: Wellenschaft
- 2: zweiter Wellenteil
- 21: Trichter
- 22: Innensechskant, erstes Ende
- 23: Abtriebskopf, Kegelrad
- 3: Getriebeeinheit
- 31: Kegelrad
- 32: Lagerabschnitt
- 4: Gehäuse
- 41: Gabel

## Patentansprüche

1. Scheinwerfer mit einem Gehäuse (4), einem um eine erste Achse gegenüber dem Gehäuse (4) schwenkbaren Tragmittel und einer zum Tragmittel um eine zweite Achse schwenkbaren Lichteinheit, wobei der Scheinwerfer eine Antriebswelle (1, 2) zum Schwenken der Lichteinheit um die zweite Achse aufweist, die über eine Getriebeeinheit (3) mit der Lichteinheit gekoppelt ist, wobei die Antriebswelle (1 ,2) zur Übertragung einer Drehbewegung von einem Antriebskopf (11) der Antriebswelle (1, 2) zu einem Abtriebskopf (23) der Antriebswelle (1, 2) geeignet und eingerichtet ist und wobei der Antriebskopf (11) an dem Gehäuse (4) gelagert ist,
**dadurch gekennzeichnet,**
**dass** die Antriebswelle (1, 2) einen ersten Wellenteil (1) und einen zweiten Wellenteil (2) aufweist, wobei die Wellenteile (1, 2) an ersten Enden (12, 22) zur Übertragung der Drehbewegung nach Art einer Vielkeilverbindung zueinander axial verschiebbar und drehfest mit einander verbunden sind und wobei sich eine zu übertragende Drehbewegung im ersten Wellenteil (1) um eine erste Drehachse und im zweiten Wellenteil (2) um eine zweite Drehachse vollzieht, und
**dass** die Wellenteile (1, 2) um vorzugsweise mehrere Achsen senkrecht zur ersten Drehachse und zur zweiten Drehachse zueinander schwenkbar sind.

2. Scheinwerfer nach Anspruch 1, **dadurch gekennzeichnet, dass** der erste Wellenteil (1) für die Verbindung mit dem zweiten Wellenteil (2) am ersten Ende eine Außenzahnung, einen Außensechskant (12) oder dergleichen aufweist und der zweite Wellenteil (2) für die Verbindung mit dem ersten Wellenteil (1) am ersten Ende dazu komplementär eine Innenzahnung, einen Innensechskant (22) oder dergleichen aufweist.

3. Scheinwerfer nach Anspruch 1 oder 2, **dadurch gekennzeichnet, dass** der erste Wellenteil (1) am dem ersten Ende (12) gegenüberliegenden Ende den Antriebskopf (11) der Antriebswelle (1, 2) und der zweite Wellenteil (2) am dem ersten Enden (22) gegenüberliegenden Ende den Abtriebskopf (23) aufweist.

4. Scheinwerfer nach Anspruch 2 oder 3, **dadurch gekennzeichnet, dass** die Außenzahnung, der Außensechskant (12) oder dergleichen zum Erleichtern der Schwenkbewegung eine der Achsen senkrecht zu der ersten Drehachse und der zweiten Drehachse abgerundet oder ballig ist, so dass die Innenzahnung, der Innensechskant (22) oder dergleichen in verschiedenen Stellungen der Wellenteile (1, 2) zueinander tagential an der Außenzahnung, dem Außensechskant (12) oder dergleichen anliegt.

5. Scheinwerfer nach einem der Ansprüche 1 bis 4, **dadurch gekennzeichnet, dass** der Antriebskopf (11) einen Innensechskant (111) aufweist.

6. Scheinwerfer nach einem der Ansprüche 1 bis 5, **dadurch gekennzeichnet, dass** das zweite Wellenteil (2) drehbar um die zweite Drehachse an der Lichteinheit gelagert ist.

7. Scheinwerfer nach einem der Ansprüche 1 bis 6, **dadurch gekennzeichnet, dass** der Abtriebskopf (23) ein Kegelrad umfasst.

8. Scheinwerfer nach Anspruch 7, **dadurch gekennzeichnet, dass** das Kegelrad (23) des Abtriebskopfes ein Kegelrad (31) der Getriebeeinheit (3) kämmt

9. Scheinwerfer nach einem der Ansprüche 1 bis 8, **dadurch gekennzeichnet, dass** der Antriebskopf (11) eine Aufnahme für einen Dichtring, insbesondere einen O-Ring (112) aufweist, und dass der Dichtring den Antriebskopf (11) gegenüber dem Gehäuse (4) abdichtet.

## Claims

1. Headlamp comprising a housing (4), a supporting means swiveling around a first axis relative to the housing (4) and a light unit swiveling around a second axis relative to the supporting means, wherein the headlamp has a drive shaft (1, 2) for the swiveling of the light unit around the second axis being coupled with the light unit by means of a gear unit (3), and wherein the drive shaft (1, 2) is suitable and equipped for the transmission of a rotating movement from an drive end (11) of the drive shaft (1, 2) to a driven end (23) of the drive shaft (1, 2) and wherein the drive end (11) is supported on the housing (4),
**characterized in that** the drive shaft (1, 2) has a first shaft part (1) and a second shaft part (2), and wherein the shaft parts (1, 2) are connected axially slidable and coupled for co-rotation at the first ends (12, 22) for the transmission of the rotating movement after the fashion of a spline connection and wherein a rotating movement takes place around a first axis of rotation in the first shaft part (1) and around a second axis of rotation in a second shaft part (2),and
that the shaft parts (1, 2) are swiveling relative to one another around preferably several axes vertical to the first axis of rotation and to the second axis of rotation.

2. Headlamp according to claim 1, **characterized in that** the first shaft part (1) has an external toothing, a hexagon head (12) or similar at the first end for the coupling with the second shaft part (2) and that the second shaft part (2) has a complementary internal toothing, a hexagon recess (22) or similar at the first end for the coupling with the first shaft part (1).

3. Headlamp according to claim 1 or 2, **characterized in that** the first shaft part (1) has the drive end (11) of the drive shaft (1, 2) at the end opposite the first end (12) and the second shaft part (2) has the driven end (23) at the end opposite the first end (22).

4. Headlamp according to claim 2 or 3, **characterized in that** the external toothing, the hexagon head (12) or similar is rounded or crowned to make the swiveling movement around one of the axes running vertical to the first rotational axis and the second rotating axis easier, so that the inner toothing, the hexagon recess (22) or similar touches the external toothing, the hexagon head (12) or similar tangentially in various positions of the shaft parts (1, 2) relative to one another.

5. Headlamp according to one of the claims 1 to 4, **characterized in that** the drive end (11) has a hexagon recess (111).

6. Headlamp according to one of the claims 1 to 5, **characterized in that** the second shaft part (2) is supported rotatable around the second axis of rotation on the light unit.

7. Headlamp according to one of the claims 1 to 6, **characterized in that** the driven end (23) comprises a conical gear wheel.

8. Headlamp according to claim 7, **characterized in that** the conical gear wheel (23) of the driven end engages with a conical gear wheel (31) of the gear unit (3).

9. Headlamp according to one of the claims 1 to 8, **characterized in that** the driven end (11) has a seat for a sealing ring, particularly for an o-ring (112), and that the sealing ring seals the drive end (11) relative to the housing (4).

## Revendications

1. Projecteur avec un boîtier (4), un élément de support pivotable autour d'un premier axe par rapport au boîtier (4) et une unité d'éclairage pivotable autour d'un deuxième axe vers l'élément de support, le projecteur présentant un arbre d'entraînement (1, 2) pour pivoter l'unité d'éclairage autour du deuxième axe qui est accouplé à travers une unité d'engrenage (3) avec l'unité d'éclairage, l'arbre d'entraînement (1, 2) étant approprié et configuré de transmettre un mouvement rotatoire d'une tête d'entrée (11) de l'arbre d'entraînement (1, 2) à une tête de sortie (23) de l'arbre d'entraînement et la tête d'entrée (11) étant montée sur palier au boîtier (4),
**caractérisé en ce que**
l'arbre d'entraînement (1, 2) présente une première partie de l'arbre (1) et une deuxième partie de l'arbre (2), les parties de l'arbre (1, 2) étant déplaçables axialement l'une par rapport à l'autre et reliées sans rotation sur des premiers bouts (12, 22) pour transmettre le mouvement rotatoire à la façon d'un assemblage à plusieurs clavettes et un mouvement rotatoire à transmettre étant effectué dans la première partie de l'arbre (1) autour d'un premier axe de rotation et dans la deuxième partie de l'arbre (2) autour d'un deuxième axe de rotation et
que les parties de l'arbre (1, 2) sont pivotables de préférence autour de plusieurs axes perpendiculairement au premier axe de rotation et pivotables l'une par rapport à l'autre vers le deuxième axe de rotation.

2. Projecteur selon la revendication 1, **caractérisé en ce que** la première partie de l'arbre (1) présente une denture extérieure au premier bout, un six pans extérieur (12) ou d'autres choses semblables pour la liaison avec la deuxième partie de l'arbre (2) et la deuxième partie de l'arbre (2) présente complémentairement une denture intérieure au premier bout, un six pans creux (22) ou d'autres choses semblables pour la liaison avec la première partie de l'arbre (1) .

3. Projecteur selon la revendication 1 ou 2, **caractérisé en ce que** la première partie de l'arbre (1) présente la tête d'entrée (11) de l'arbre d'entraînement (1, 2) au bout opposé au premier bout (12) et la deuxième partie de l'arbre (2) présente la tête de sortie (23) au bout opposé au premier bout (22).

4. Projecteur selon la revendication 2 ou 3, **caractérisé en ce que** la denture extérieure, le six pans extérieur (12) ou d'autres choses semblables pour faciliter le pivotement autour un des axes est perpendiculaire au premier axe de rotation et arrondi ou galbé par rapport au deuxième axe de rotation, de manière à ce que la denture intérieure, le six pans creux (22) ou d'autres choses semblables se positionnent dans les différentes positions des parties de l'arbre (1, 2) de façon tangentielle l'un par rapport à l'autre sur la denture extérieure, le six pans extérieur (12) ou d'autres choses semblables.

5. Projecteur selon l'une des revendications 1 à 4, **caractérisé en ce que** la tête d'entrée (11) présente un six pans creux (111).

6. Projecteur selon l'une des revendications 1 à 5, **caractérisé en ce que** la deuxième partie de l'arbre (2) est pivotante autour du deuxième axe de rotation sur l'unité d'éclairage.

7. Projecteur selon l'une des revendications 1 à 6, **caractérisé en ce que** la tête de sortie (23) comprend une roue conique.

8. Projecteur selon la revendication 7, **caractérisé en ce que** la roue conique (23) de la tête de sortie s'engrène dans la roue conique (31) de l'unité d'engrenage.

9. Projecteur selon l'une des revendications 1 à 8, **caractérisé en ce que** la tête d'entrée (11) présente un logement pour un joint d'étanchéité, surtout un joint torique (112) et que le joint d'étanchéité étanchéifie la tête d'entrée (11) par rapport au boîtier (4).
